(19) Europäisches Patentamt
European Patent Office
Office européen des brevets

(11) Publication number: 0 361 803
A2

(12) # EUROPEAN PATENT APPLICATION

(21) Application number: 89309669.3

(22) Date of filing: 22.09.89

(51) Int. Cl.5: C08K 5/00 , C08L 83/04 , C08L 83/14

(30) Priority: 26.09.88 US 249732

(43) Date of publication of application:
04.04.90 Bulletin 90/14

(84) Designated Contracting States:
BE DE FR GB NL

(71) Applicant: DOW CORNING CORPORATION
3901 S. Saginaw Road
Midland Michigan 48686-0994(US)

(72) Inventor: Kamis, Russell Peter
2960-B Yoder
Midland Michigan 48640(US)
Inventor: Lower, Loren Dale
612 Sylvan Lane
Midland Michigan(US)
Inventor: Klosowski, Jerome Melvin
2029 Briar Drive
Bay City Michigan(US)
Inventor: Chaffee, Roger George
1116 Wallen
Midland Michigan(US)

(74) Representative: Laredo, Jack Joseph et al
Elkington and Fife Beacon House 113
Kingsway
London, WC2B 6PP(GB)

(54) **In situ formed titanium chelate catalysts.**

(57) A process for producing a silicone sealant mixes a hydroxyl or alkoxy endblocked polydiorganosiloxane, an alkoxy functional crosslinker, tetraorganotitanate catalyst, optional filler and plasticizer and ethylacetoacetate, then devolatilizes and stores to give a silicone sealant containing an in situ formed titanium chelate catalyst which cures upon exposure to moisture and which has an improved cure time and reduced color.

EP 0 361 803 A2

# IN SITU FORMED TITANIUM CHELATE CATALYSTS

A process for producing a silicone sealant mixes a hydroxyl or alkoxy endblocked polydiorganosiloxane, an alkoxy functional crosslinker, tetraorganotitanate catalyst, optional filler and plasticizer and ethylacetoacetate, then devolatilizes and stores to give a silicone sealant containing an in situ formed titanium chelate catalyst which cures upon exposure to moisture and which has an improved cure time.

This invention relates to a process for producing a silicone sealant containing a hydroxyl or alkoxy endblocked polydiorganosiloxane, alkoxy functional crosslinker and titanate catalyst, the process consisting essentially of mixing (1) 100 parts by weight of polydiorganosiloxane having hydroxyl or alkoxy endblocking and a viscosity of from 0.5 to 3000 Pa•s at 25° C., (5) from 0 to 200 parts by weight of filler, (6) from 0 to 50 parts by weight of plasticizer, then (B) admixing in the absence of moisture, (2) from 0.1 to 14 parts by weight of a crosslinker of the formula

$R'_aSi(OR'')_{4-a}$

where R′ is at least one selected from the group consisting of methyl, ethyl, propyl, phenyl and vinyl, R″ is at least one selected from the group consisting of methyl, ethyl, propyl and butyl and a is 0, 1 or 2, (3) from 0.3 to 6.0 parts by weight of tetraorganotitanate catalyst, (4) from 0.25 to 5.0 parts by weight of ethylacetoacetate, but not enough to replace more than 65 percent of the alkoxy radicals on the titanium of (3) with acetoacetate radicals, then (C) devolatilizing the mixture and storing in the absence of moisture, to give a silicone sealant, containing an in situ formed titanium chelate catalyst, which cures to an elastomer upon exposure to moisture and which has an improved cure time and reduced tendency to slump when compared to a composition not containing ingredient (4).

The method of this invention forms a chelated titanium catalyst in situ in a mixture of hydroxyl or alkoxy endblocked polydiorganosiloxane and alkoxysilane crosslinker by adding ethylacetoacetate to the mixture before or after a tetraorganotitanium catalyst has been added. The resulting mixture, containing the in situ formed chelated titanium catalyst, has a faster cure time when the polymer used is alkoxy endblocked.

The method of this invention uses polymer (1) of the formula

$$D\overset{R}{\underset{R}{Si}}O\ (\overset{R}{\underset{R}{Si}}O)_x\ \overset{R}{\underset{R}{Si}}D$$

where each R is free of aliphatic unsaturation and is at least one selected from the group consisting of monovalent hydrocarbon, monovalent halohydrocarbon and monovalent cyanoalkyl radicals of 1 to 18 inclusive carbon atoms, each D is selected from the group consisting of hydroxyl radical and radical of the formula

$$(R''O)_{3-m}\overset{R_m}{Si}Z$$

where each R″ is at least one selected from the group consisting of methyl, ethyl, propyl and butyl, Z is a divalent hydrocarbon radical or combination of divalent hydrocarbon radicals and siloxane radicals, m is 0 or 1 and x is of a value such that the polymer has a viscosity of from 0.5 to 3000 Pa•s at 25° C.

When D of the above polymer (1) is hydroxyl, the polymer is the well known hydroxyl endblocked polydiorganosiloxane commonly used in the production of siloxane sealants. The polymer is well known in the art and its description and method of manufacture are also well known and need no further description.

When D of the above polymer (1) is alkoxy silane, the polymer is of the formula

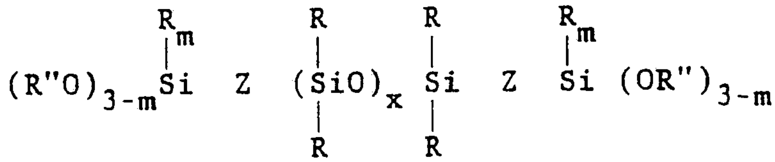

I

where each R is free of aliphatic unsaturation and is at least one selected from the group consisting of monovalent hydrocarbon, monovalent halohydrocarbon and monovalent cyanoalkyl radicals of 1 to 18 inclusive carbon atoms, each R″ is at least one selected from the group consisting of methyl, ethyl, propyl and butyl, Z is a divalent hydrocarbon radical or combination of divalent hydrocarbon radicals and siloxane radicals, m is 0 or 1 and x is of a value such that the polymer has a viscosity of from 0.5 to 3000 Pa•s at 25°C. R can be any of those monovalent hydrocarbon, monovalent halohydrocarbon or monovalent cyanoalkyl radicals of 1 to 18 inclusive carbon atoms which are known to be useful in silicone sealant materials. The preferred radicals are methyl, ethyl, propyl, phenyl and trifluoropropyl. Z is a divalent hydrocarbon radical or combination of divalent hydrocarbon radicals and siloxane radicals. The divalent hydrocarbon radical can be from 2 to 15 carbon atoms in the form of a divalent alkylene or arylene radical such as ethylene, propylene, hexylene, phenylene and

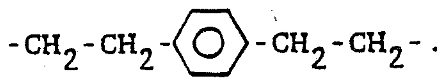

A preferred Z may be represented by the formula

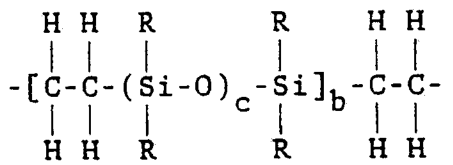

where R is as defined above b is 0 or 1 and c is from 1 to 6. The preferred viscosity of polymer (1) is from 1 to 1000 Pa•s at 25°C. Lower viscosities give cured sealants which are very hard with high modulus because of the high amount of crosslinking while higher viscosities give sealants with a very low extrusion rate.

A preferred polymer is represented by the formula

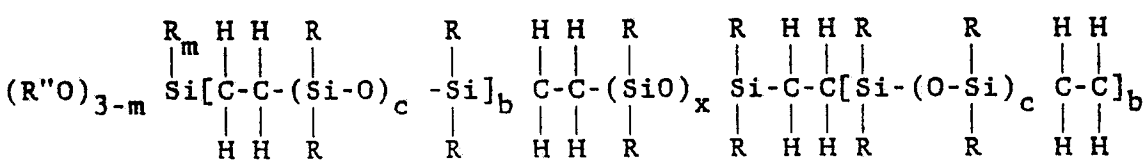

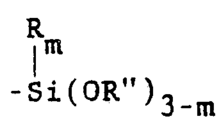

(II)

where R and R″ are as defined above, m is 0 or 1, b is 0 or 1, c is from 1 to 6 and x is such that the viscosity is from 0.5 to 3000 Pa•s at 25°C.

A preferred polymer, obtained when b is 0, is of the formula

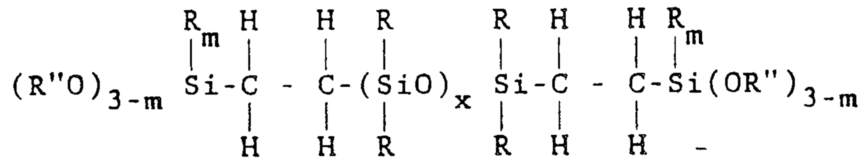 (III)

or, when b is 1 and c is 1, is of the formula

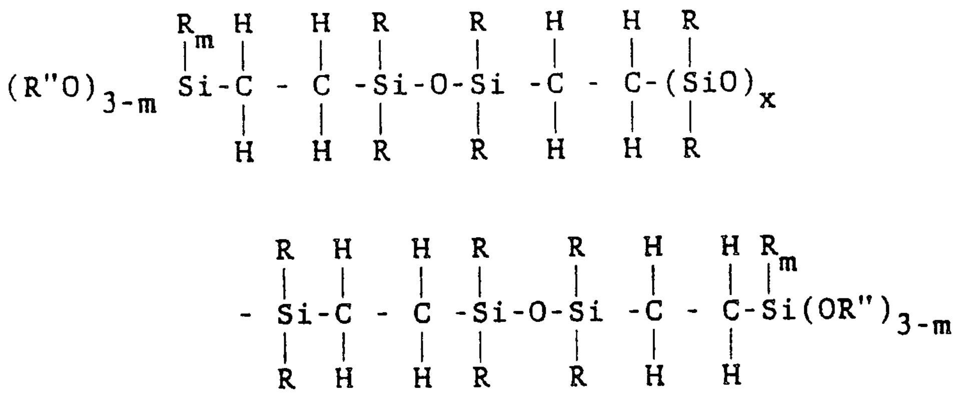 (IV)

where R and $R''$ are as described above. Methyl radical is preferred for R and $R''$. The radicals can be the same or combinations of the above where at least 50 mol percent of the radicals are methyl radicals.

The polymer of formula (II) can be manufactured by reacting a vinyl endblocked polydiorganosiloxane with an endcapping composition of the formula

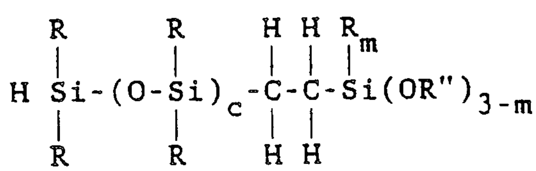

where R and $R''$ are as defined above, m is 0 or 1 and c is 1 to 6. This endcapping composition can be produced by a method comprising (A) mixing 1 mol of a composition (a) of the formula

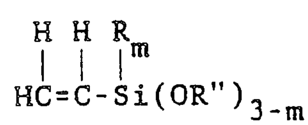

where R, $R''$ and m are as defined above, with greater than 2 moles of a composition (b) of the formula

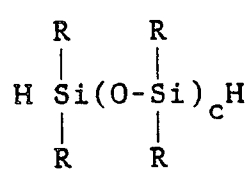

where R is as defined above and c is from 1 to 6, in the presence of a platinum catalyst and allowing to react, then, (B) optionally stripping the excess composition (b) from the product, to give an endcapping composition of the formula as given above. When c is equal to 1, the product obtained is the endcapping composition shown above which is used to produce the polymer of formula (IV). A preferred endcapping composition is that obtained when c is equal to 1 and m is equal to 0. The above endcapping composition, it's method of manufacture and it's use in the manufacture of silicone sealants, having an alkoxy functional

silane crosslinker and a titaniym catalyst, is taught in U.S. Patent Application Serial No. 148,196, filed January 28, 1988, assigned to the assignee of the instant application.

The polymer of formula (III) may be produced by reacting a hydrogen endblocked polydiorganosiloxane with a silane of the formula

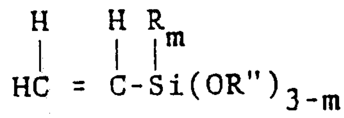

in the presence of a platinum catalyst such as chloroplatinic acid at a temperature of from 30 to 150° C. Methods of making these polymers are taught in U.S. Patent No. 3,175,993, issued March 30, 1965, to Weyenberg, which shows methods of manufacturing polymer of formula (III).

The polymer of formula (IV) can be manufactured by reacting a vinyl endblocked polydiorganosiloxane with an endcapping composition of the formula

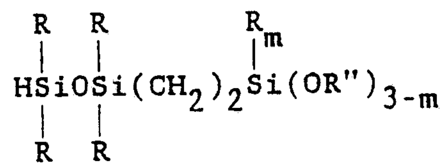

where R is as defined above, using a platinum catalyst to cause the materials to react. This endcapping composition is prepared by reacting $ViR_mSi(OR'')_{3-m}$, where Vi is vinyl radical, with $(R_2HSi)_2O$ in the presence of a platinum catalyst where only one end of the disilane is reacted. This can be done by combining 1 mol of the $ViR_mSi(OR'')_{3-m}$ with greater than 2 moles of the disilane. When this mixture is combined with a platinum catalyst, there is a slightly exothermic reaction after a few minutes at room temperature. The color changes from clear to light yellow. A byproduct will be present consisting of product produced by the reaction of $ViR_m(OR'')_{3-m}$ to both ends of the silane. This byproduct can be left in the material. At a 1 to 2 ratio, there is about 15 percent byproduct produced. If the ratio is changed to 1 to 4, the byproduct drops to about 5 percent. The excess silane is then stripped from the product. The product can be purified by distillation if desired.

A series of polymers similiar to those shown above as polymers II, III and IV can be produced where not all of the vinyl endblocking groups on the polydiorganosiloxane are reacted with an alkoxysilane. A polymer results in which, on average, some of the ends are vinyl endblocked and some of the ends are alkoxysilethylene endblocked. Useful materials have been produced in which on average from 3 to 40 percent of the endblocking groups are vinyl radicals and the remainder are alkoxysilethylene radicals. As an example, when the endcapping composition is of the formula

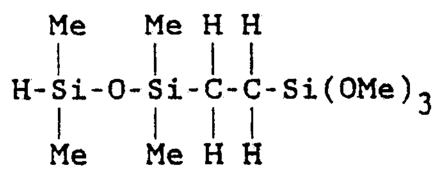

where Me is methyl radical and the vinyl endblocked polydiorganosiloxane is a polydimethylsiloxane having a viscosity of about 55 Pa•s at 25° C. then the degree of endblocking versus the amount of endcapping composition used can be estimated from the following:

| Parts by Weight of Endcapper | Percent of Alkoxysilethylene Endblocks |
|---|---|
| 0.9 | 100 |
| 0.8 | 89 |
| 0.7 | 78 |
| 0.6 | 67 |
| 0.5 | 55 |

When these polymers having a portion of the endblocking present as vinyl radicals are formulated into moisture curing sealants, the modulus of the cured sealant is lower than if all of the endblocking groups were alkoxysilethylene groups. By adjusting the degree of endcapping, the modulus of the resulting elastomer can be controlled at the desired level.

The above polymers can also be produced by using similar siloxanes and silanes in which the location of the hydrogen atom and the vinyl group which react together are reversed.

Useful silicone elastomeric sealants are commonly produced with a filler as one of the ingredients. These fillers are well known in the industry. They are added to the mixture to provide reinforcement of the polymer so as to control the physical properties of the sealant after curing. Reinforcing fillers, such as fumed silica, precipitated silica and diatomaceous earth are used to give the highest physical strengths to the sealants. Reinforcing fillers are generally recognized as being very fine particles having a surface area from about 50 to 700 $m^2/g$. These fillers may be used with untreated filler surfaces or with treated filler surfaces, the treatment being used to modify the filler surface so that it properly reacts with the polymer and the other ingredients in the sealant. Calcium carbonate fillers are now available which are produced by precipitation which have a surface area of about 20 $m^2/g$ that give a reinforcing effect also. Extending fillers such as titanium dioxide, zirconium silicate, calcium carbonate, iron oxide, ground quartz and carbon black may be used. The amounts of filler used can obviously be varied within wide limits in accordance with the intended use. For example, in some cases the sealant could be used with no filler, but it would have very low physical properties. Reinforcing fillers are commonly used in amounts from about 5 to 60 parts by weight to give the highest physical properties, such as tensile strength. Extending fillers are finely ground in that the average particle size is in the range of from about 1 to 10 micrometers. Extending fillers are used to modify the sealant properties and to provide opacity in some cases. The amount of filler varies from 0 to 200 parts by weight, based upon 100 parts by weight of the polydiorganosiloxane (1). The amount used depends upon whether it is reinforcing or extending and also upon the desired use of the final composition, sealants, for example, generally have higher filler loading than the coating compositions and high strength sealants having reinforcing filler require less filler than the lower strength sealants filler predominately with extending fillers.

The composition can contain from 0 to 50 parts by weight of a plasticizer, such as a low viscosity hydroxyl or alkyl endblocked polydiorganosiloxane where the organo groups are those shown above for the polydiorganosiloxane (1). The plasticizer has a viscosity of 0.5 Pa•s at 25° C. or less.

A crosslinker (2) of the formula $R'_aSi(OR'')_{4-a}$, where $R'$ is at least one selected from the group consisting of methyl, ethyl, propyl, phenyl and vinyl, $R''$ is at least one selected from the group consisting of methyl, ethyl, propyl and butyl and a is 0, 1 or 2, is added as a moisture scavenger and as a modulus control agent. These alkoxy silanes and their method of manufacture are well known. The amount of crosslinker preferably is from 0.1 to 14 parts by weight, with from 2 to 8 parts most preferred. When a is 2, the silane is a chain extender; in this case, it is preferable that the polymer (1) be trialkoxy endblocked, so that crosslinking as well as chain extension takes place. It is possible to produce useful sealants without using a crosslinker when the polymer of this invention is present because of the functionality of the polymer itself, but from a practical viewpoint, the crosslinker is useful in that it contributes to the excellent shelf life of the sealant. It is also useful in controlling the degree of crosslinking in the cured elastomeric sealant; more of the trifunctional crosslinker results in a harder, lower elongation elastomer, while more of the difunctional silane acts as a chain extender to give a softer, higher elongation elastomer.

The sealants of this invention are cured through the use of a titanium catalyst which is formed in situ by the reaction between the tetraorganotitanate (3) and the ethylacetoacetate (4). The tetraorganotitanate (3) can be any of those known to be useful in catalyzing the moisture induced reaction of alkoxy containing siloxanes or silanes, such as tetrabutyltitanate, tetra-2-ethylhexyltitanate (tetraoctyltitanate), tetraphenyltitanate and tetraisopropyltitanate. Preferred tetraorganotitanates are tetrabutyltitanate and tetraisopropyltitanate.

The tetraorganotitanate (3) is reacted in situ by the addition of ethylacetoacetate (4) to the mixture; by adding the ethylacetoacetate to the mixture in the absence of moisture. The amount of ethylacetoacetate is determined by the amount of tetraorganotitanate that is used. There should be at least enough ethylacetoacetate to give 1/2 mole of ethylacetoacetate per mole of tetraorganotitanate, but not over 2.5 moles of ethylacetoacetate per mole of tetraorganotitanate. The preferred amount is from 1 to 2 moles of ethylacetoacetate per mole of tetraorganotitanate. When reacted, the chelated titanate has an average of from one to two acetoacetate groups per molecule, with the remainder of the organo groups alkoxy groups. The in situ formed titanate can also be produced by mixing the crosslinker (2), the tetraorganotitanate (3) and the ethylacetoacetate (4) in the absence of moisture and then adding this mixture to the mixture of polydiorganosiloxane (1), filler (5) and plasticizer (6), all done in the absence of moisture.

A preferred method mixes the polymer (1), having hydroxy or alkoxy endblocking, with filler (5) if desired, deairing and adding a deaired mixture of crosslinker (2), titanium catalyst (3) and ethylacetoacetate (4), which are added in the absence of exposure to moisture. The crosslinker (2), titanium catalyst (3) and ethylacetoacetate (4) can be added separately or they can be mixed together and then added as a mixture. They are thoroughly stirred to give a uniform mixture. The uniform mixture is then preferably deaired, then sealed into storage containers, sealant tubes for example, to store it until it is to be used.

Another preferred method mixes the polymer (1), crosslinker (2), catalyst (3) and ethylacetoacetate (4), in any of the above mentioned orders, until uniform, then admixes the filler (5). In any of the above mixing methods, if desired, the plasticizer (6) can be added, preferably before the addition of the filler (5). The plasticizer is normally added when the amount of filler used is at the upper range of the amount. The plasticizer aids in preventing a reaction between the filler and the polymer which may result in a stiffing of the composition.

The compositions of this invention can be used to produce silicone sealants which cure to elastomers when exposed to the moisture in the atmosphere. The sealants have a reduced tendency to slump when extruded from their storage tubes into a position to be sealed. They have a shorter cure time than a similar formulation which is not formed in accordance with the invention. There is less of a tendency for the in situ formed chelated titanate to be colored than is found in a sealant in which a prereacted chelated titanate is used as the catalyst.

The following examples are included for illustrative purposes only and should not be construed as limiting the invention which is properly set forth in the appended claims. Parts are parts by weight.

Example 1

Comparable sealants were prepared using as the catalyst a prepared chelated catalyst and a catalyst prepared in situ.

First, a sealant base (A) was prepared by mixing 100 parts of hydroxyl endblocked polydimethylsiloxane fluid having a viscosity of about 50 Pa•s at 25°C. and a hydroxyl content of about 0.057 weight percent, which fluid may contain a small amount of trimethylsilyl endblocks, 3.35 parts of hydroxyl endblocked polymethylphenylsiloxane having a viscosity of about 0.5 Pa•s at 25°C. and about 4.5 weight percent silicon-bonded hydroxyl radicals, 30 parts of trimethylsilyl endblocked polydimethylsiloxane fluid, 12.5 parts of fumed silica having a surface area of about 150 $m^2/g$ and 177 parts of calcium stearate treated calcium carbonate filler having an average particle size of about 3 micrometers until uniform.

Then 200 g of the above base was placed in a sealant tube and 3.92 g of methyltrimethoxysilane, 1.34 g of 2,5-diisopropoxy-bis-ethylacetoacetate titanium and 2 drops of adhesion additive, were admixed in the absence of moisture. After thorough mixing for 10 minutes, the tube was centrifuged at high speed for 20 minutes to remove air, then was placed in a vacuum chamber at 25 inches of mercury for 3 hours to remove any volatile material. The resulting sample 1 was a comparative example.

Sample 2 was prepared by premixing 0.90 g of tetraisopropyltitanate with 0.41 g of ethylacetoacetate (the molar amount to result in one acetoacetate radical per titanium radical), letting reaction take place for 2 minutes, then adding 3.92 g of methyltrimethoxysilane and 2 drops of adhesion additive. This mixture was added to 200 g of the above base (A) and mixed and devolatilized as for sample 1.

Sample 3 was prepared by premixing 0.90 g of tetraisopropyltitanate with 0.82 g of ethylacetoacetate (the molar amount to result in two acetoacetate radicals per titanium radical), letting reaction take place for 2 minutes, then adding 3.92 g of methyltrimethoxysilane and 2 drops of adhesion additive. This mixture was added to 200 g of the above base (A) and mixed and devolatilized as for sample 1.

The sealants were then tested for physical properties. The curing properties were evaluated by

measuring the skin over time (SOT), which is defined as the time required for the material to cure to the point where it no longer adheres to a clean fingertip lightly applied to the surface. The cure conditions are 23° C. and 50 percent relative humidity. The tack free time (TFT) is defined as the time in minutes required for a curing material to form a non-tacky surface film. A sample is spread on a clean smooth surface and timing is begun. Periodically, a cleaned strip of polyethylene film is laid upon a fresh surface and a one ounce weight applied to it. After 4 seconds, the weight is removed and the strip gently pulled off. The time when the strip pulls cleanly away from the sample is recorded as the tack free time.

A portion of the sealant was spread into a sheet and allowed to cure for 14 days at 25° C. and 50 percent relative humidity. This sheet was then measured for durometer in accordance with ASTM D 2240 and for tensile strength and modulus in accordance with ASTM D 412. The results are shown in Table I.

Table I

| Sample | SOT min. | TFT min. | Durometer Shore A | Tensile Strength psi | Elongation percent | Modulus at | | |
|---|---|---|---|---|---|---|---|---|
| | | | | | | 50% psi | 100% psi | 150% psi |
| 1* | 40 | 87 | 28 | 210 | 676 | 60 | 84 | 97 |
| 2 | 49 | 112 | 32 | 256 | 664 | 70 | 95 | 107 |
| 3 | 37 | 69 | 30 | 213 | 656 | 65 | 87 | 101 |

* comparative example

## Example 2

A polydiorganosiloxane, polymer (B), having endblocking of trialkoxysilethylene was prepared by mixing 100 parts of dimethylvinylsiloxy endblocked polydimethylsiloxane having a viscosity of about 60 Pa•s at 25° C. with 0.7 part of a tetramethyldisilane in which one of the hydrogen atoms is replaced with a trimethoxysilethylene group, the silane having the formula

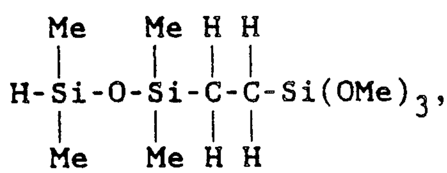

and 0.01 part of chloroplatinic acid complex of divinyltetramethyldisiloxane diluted with dimethylvinylsiloxy endblocked polydimethylsiloxane to provide 0.7 weight percent platinum and allowing the mixture to react to give a polydiorganosiloxane having about 80 percent of the ends capped with a trimethoxysilethylene of the formula

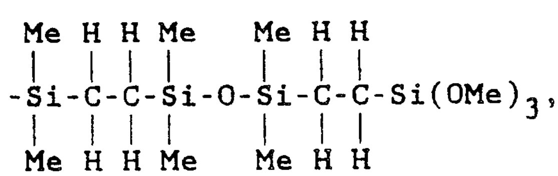

with the other 20 percent of the ends remaining as vinyl endcapped.

A sealant base was prepared by mixing 100 parts of polymer B with 8 parts of the fumed silica of Example 1. Then 100 g of base was admixed, in the absence of moisture, with a mixture of 6 g of methyltrimethoxysilane and the amounts of titanium catalyst and ethylacetoacetate shown in Table II. After devolatilization, each sample was evaluated for tack free time (TFT) with the results shown in Table II.

Table II

| Sample | TIPT g | TBT g | EAA g | TFT min. |
|---|---|---|---|---|
| 4* | 2.0 | - | - | 112 |
| 5 | 2.0 | - | 0.9 | 34 |
| 6 | 1.5 | - | 0.7 | 36 |
| 7 | 1.5 | - | 1.4 | 35 |
| 8* | 1.3 | - | - | >90 |
| 9 | 1.3 | - | 0.61 | <50 |
| 10 | - | 1.6 | 0.61 | 35 |

* comparative example
TIPT is tetraisopropyltitanate
TBT is tetrabutyltitanate
EAA is ethylacetoacetate

Example 3

A series of samples were prepared with titanium catalysts, then converted to in situ created chelated titanium catalyst.

In each case, a sealant was prepared by mixing in the absence of moisture 100 g of polymer (B), 9 g of the fumed silica of Example 1, 7 g of methyltrimethoxysilane and 1.5 g of the titanium catalyst shown in Table III, either tetraisopropyltitanate (TIPT) or tetrabutyltitanate (TBT). Then a duplicate of each was prepared with the indicated amount of ethylacetoacetate also added to the precatalyzed sealant. The tack free time of each sealant was then measured as described above, with the result shown in Table III.

Table III

| Sample | TIPT g | TBT g | EAA g | TFT min. |
|---|---|---|---|---|
| 11* | | 1.5 | - | 103 |
| 12 | | 1.5 | 0.67 | 45 |
| 13* | 1.5 | | - | >90 |
| 14 | 1.5 | | 0.83 | 45 |

* comparative example

Example 4

A series of sealants were prepared by mixing in the absence of moisture 100 g of polymer B, 7 g of methyltrimethoxysilane, the amount of titanium catalyst shown in Table IV and the amount of the fumed silica of Example 1 shown in the table. In two of the samples, the titanate was converted in situ into a chelated titanate in accordance with this invention by adding ethylacetoacetate as the last step. The resultant sealants were then evaluated for slump, extrusion rate and tack free time, with the results shown in Table IV. Slump was measured in accordance with ASTM D 2202, extrusion rate is the weight in grams of the amount of sealant extruded through a 1/8 inch orifice under a pressure of 90 pounds per square inch.

Table IV

| Sample | TIPT g | TBT g | TDIDE g | Silica g | EAA g | Slump Extrusion inch | Slump Extrusion g/min | TFT min. |
|---|---|---|---|---|---|---|---|---|
| 15* | | | 2 | 8 | - | 0.15 | 228 | 35 |
| 16* | 1.5 | | | 9 | | 2.4 | 144 | >90 |
| 17 | 1.3 | | | 9 | 0.61 | 0.22 | 176 | 47 |
| 18 | | 1.6 | | 9 | 0.61 | 0.18 | 165 | 62 |
| recheck after one week aging at 70 °C. | | | | | | | | |
| 16* | | | | | | 2.20 | 179 | 136 |
| 17 | | | | | | 0.16 | 194 | 60 |
| 18 | | | | | | 0.10 | 210 | 48 |

* comparative example

TDIDE is 2,5-di-isopropoxy-bis-ethylacetoacetate titanium

Sample 15 was a dark yellow, while samples 17 and 18 were a light yellow.

## Example 5

A sealant base was prepared by mixing 100 parts of polymer B and 8 parts of a fumed silica with a surface area of about 250 $m^2/g$, said surface having been treated with trimethylsiloxy units. Then 100 g of the base was mixed in the absence of moisture with 6 g of methyltrimethoxysilane and 2 g of 2,5-di-isopropoxy-bis-ethylacetoacetate titanium. After processing as above, this comparative sealant had a tack free time of 60 minutes. A similar composition having 1.6 g of tetrabutyltitanate and 0.61 g of ethylacetoacetate added in place of the 2,5-di-isopropoxy-bis-ethylacetoacetate titanium had a tack free time of only 43 minutes. This result was independent of whether the EAA was premixed with the titanate or added as a separate and last step in compounding.

## Example 6

Different esters were evaluated for use in forming the in situ chelated titanium catalyst.

Sealants were prepared by mixing 100 g of the base of example 5, 6 g of methyltrimethoxysilane, 1.3 g of tetraisopropyltitanate and the amount and kind of ester shown in Table V. The tack free time of the resulting sealants is shown in the Table. Ethylacetoacetate is the only ester which gave the great reduction in cure time.

Table V

| Sample | EAA g | EA g | ME g | TFT min. |
|---|---|---|---|---|
| 19* | - | - | - | >90 |
| 20 | 0.61 | | | <50 |
| 21* | - | 0.41 | - | -122 |
| 22* | | | 0.75 | 124 |
| 23* | | | 0.75 | 125 |

* comparative example
EAA is ethylacetoacetate
EA is ethyl acetate
ME is malonic ester

## Claims

1. A process for producing a silicone sealant containing a hydroxyl or alkoxy endblocked polydiorganosiloxane, alkoxy functional crosslinker and titanate catalyst, the process consisting essentially of
(A) mixing in the absence of moisture
(1) 100 parts by weight of polydiorganosiloxane having hydroxyl or alkoxy endblocking and a viscosity of from 0.5 to 3000 Pa•s at 25° C.,
(2) from 0.1 to 14 parts by weight of a crosslinker of the formula
$R'_aSi(OR'')_{4-a}$
where R′ is at least one selected from the group consisting of methyl, ethyl, propyl, phenyl and vinyl, R″ is at least one selected from the group consisting of methyl, ethyl, propyl and butyl and a is 0, 1 or 2,
(3) from 0.3 to 6.0 parts by weight of tetraorganotitanate catalyst,
(4) from 0.25 to 5.0 parts by weight of ethylacetoacetate, but not enough to replace more than 65 percent of the organic radicals on the titanium of (3), then
(B) devolatilizing the mixture and storing in the absence of moisture,
to give a silicone sealant, containing an in situ formed titanium chelate catalyst, which cures to an elastomer upon exposure to moisture and which has an improved cure time and reduced tendency to slump when compared to a composition not containing ingredient (4).

2. The process of claim 1 in which there is added (5) from 0 to 200 parts by weight of filler and (6) from 0 to 50 parts by weight of plasticizer.

3. The composition produced by the process of claim 1.